# EUROPEAN PATENT SPECIFICATION

(11) **EP 2 185 051 B1**
(45) Date of publication and mention of the grant of the patent: **14.05.2014**
(21) Application number: 08794097.9
(22) Date of filing: 14.08.2008
(51) Int. Cl.: A47L 9/10, A47L 9/12, B01D 46/00

(54) **A DETACHABLE FILTER INSERT FOR A VACUUM CLEANER**
ABNEHMBARER FILTEREINSATZ FÜR EINEN STAUBSAUGER
CARTOUCHE DE FILTRE DÉTACHABLE POUR ASPIRATEUR

(30) Priority: 27.08.2007 SE 0701933
(43) Date of publication of application: 19.05.2010
(73) Proprietor: Aktiebolaget Electrolux, 105 45 Stockholm (SE)
(72) Inventor: WENNERSTRÖM, Magnus, S-745 38 Enköping (SE); ELFGREN, Karin, S-14144 Huddinge (SE)
(86) International application number: PCT/SE2008/000468
(87) International publication number: WO 2009/029016

(56) References cited:
- WO-A1-01/19227
- WO-A1-2004/098368
- DE-A1- 3 517 329
- DE-B3-102006 009 257
- DE-B3-102006 009 257
- DE-U1- 20 108 544
- US-A1- 2003 145 419

## Description

The invention relates to a detachable filter insert for a vacuum cleaner, of the kind having the function of an exhaust filter and being adapted to be mounted in an air passage through the vacuum cleaner and being positioned after a dust collecting compartment in respect of the air flow through the vacuum cleaner, comprising a frame and a filtering medium being positioned within the frame, wherein the frame is provided with supporting elements at an outlet side as seen in the direction of the air flow, for supporting the filtering medium and prevent it from being detached from the frame due to the air flow through the filtering medium, and at least one finger grip to facilitate detaching and mounting of the filter insert for cleansing or replacement.

### Background of the invention

Most vacuum cleaners are provided with an exhaust filter, which is arranged in the air passage in a region after a dust collecting compartment as seen in the direction of the air flow. Normally the filter is located at the air outlet from the vacuum cleaner but can also have other positions in the air passage after the dust collecting compartment. The filter has the purpose of removing from the exhaust air any particles that may slip through the regular filter media or cyclone in the dust collecting compartment of the vacuum cleaner. The document WO 2004/098368 A1 describes such a filter insert.

Some of these exhaust filters are in form of a separate and detachable filter medium, which is clamped between inner and outer support members being provided with support bars for support of the filter medium and for preventing the filter medium to be swept away by the air flow or accidentally become detached during operation. Usually, the outer support member is in form of an openable lid to allow replacement of the filter medium. However, such separate filter media can sometimes be difficult to mount in an airtight way in the vacuum cleaner such that air will leak out around the edge portions of the filter medium.

To overcome these problems it is known, as in accordance with the present invention, to arrange the exhaust filter as a filter insert comprising a filter frame in which a filter medium is securely attached by means of e.g. gluing or welding. The filter frame is made of a rigid or semi-rigid and airtight material, preferably plastics, and a rim or edge portion of the filter frame can easily be airtight connected to the vacuum cleaner around the air passage.

However, in order to facilitate replacement or cleansing of the filter insert there is usually a need for some kind of handle or finger grip to be able to grasp the filter. On the other hand, the filter insert is normally mounted in a covered and from the outside invisible position in the vacuum cleaner and the available space for the filter insert is normally very limited. For example, the filter insert can be held by an openable lid or inserted into a groove in the vacuum cleaner. This has to effect that any hand or finger grip is not allowed to protrude too far from the filter insert such that it will become an obstacle when closing the lid or inserting the filter into the groove. It is also important to design the filter insert including the finger grip such that it will be inexpensive to manufacture, especially if the filter insert is adapted to be replaceable. These different requirements can be difficult to fulfil, especially since the available space in modern compact designed vacuum cleaners is limited.

### Summary of the invention

It is an object of the invention to provide a filter insert for vacuum cleaners, in which a hand or finger grip, for facilitating detaching and mounting of the filter insert in the vacuum cleaner, is realized in a simple, space saving and inexpensive way. At least this object is achieved by a filter insert according to claim 1.

The basis for the invention is the insight that the above object may be achieved by a filter insert comprising a frame of an air impermeable material, a filtering medium mounted in the frame and supporting elements being positioned at the outside surface of the filtering medium at the outlet side as seen in the direction of the air flow, wherein at least one hand or finger grip is arranged on the outside of the filtering medium and being hinged connected to the supporting elements such that the finger grip can be folded outwards in an angle to the plane of the filter insert for facilitating gripping of the filter insert, and subsequently folded inwards to a position in parallel to the plane of the filter insert when it is mounted in the vacuum cleaner.

Within this overall idea, the invention may be modified in many different ways within the scope of the claims. The filter insert can for example be adapted to be mounted in different parts of the vacuum cleaner. The most common position of the filter insert is at the air outlet from the vacuum cleaner, but any position after the dust collecting compartment, as seen in the direction of the air flow, could be conceivable. Also the material in the filter medium can be of different types, such as a crinkled sheet of e.g. paper, foamed plastics or a fabric. Moreover, the mounting of the filter insert in the vacuum cleaner can be performed in different ways. When the filter insert is located at the air outlet, it is most common that the filter insert is mounted behind an openable lid. However, the filter insert can also be inserted in e.g. a groove in the vacuum cleaner which e.g. can be available from the dust collecting compartment. It is advantageous for the tightness around the filter insert if some kind of sealing is arranged between the filter insert and a seat around the air passage and the filter insert is forced against the seat when mounted.

In a hereinafter described and illustrated embodiment of the invention, the frame has a rectangular form of an air impermeable material, which defines wall portions in parallel to the air flow through the filter insert. The frame has accordingly a somewhat boxlike form, which is open at the inlet as well as at the outlet side. The filter medium is mounted within the frame such that it is tightly sealed against the wall portions, e.g. by means of an adhesive or by welding. At the outlet side, the frame is provided with bars in a suitable pattern to give adequate support for the filter medium such that it will not brake or disengage due to the air flow through the filter medium. At an edge at the inlet side of the wall portions, the frame is provided with a sealing member for airtight abutment against a seat around the air passage. It is to be understood however, that the frame can be formed also in many other ways, e.g. being formed with a circular or rounded shape or to be without distinct wall portions and the bars can be arranged in any suitable pattern. It is not even necessary that the supporting elements for supporting the filter medium is in form of bars. Instead the supporting elements could be in form of e.g. a flange portion around the frame, or stop members with limited dimensions, having some extension in a plane in parallel to the filter medium. Neither is it necessary that the frame is provided with a sealing member on an inlet side.

According to the invention, the filter insert is provided with at least one finger grip at the outlet side, which is attached to the supporting elements by means of a hinged connection. In this way the finger grip can be folded between an inactive position substantially in parallel to a plane of the filter medium, when the filter insert is mounted in the vacuum cleaner, and an active position in an angle, preferably substantially perpendicular to the plane of the filter medium when the filter insert is to be removed from or inserted into the vacuum cleaner. The hinged connection can be accomplished in any arbitrary way, e.g. as a snap fit connection. However, it is preferred that the finger grip is integrated with the supporting elements such that the hinged connection is in form of a so called film hinge, i.e. a connection by means of a thinned material portion in form of a groove or the like, such that the finger grip can be bent by elastic deformation of the thinned material portion at the groove.

In the described and illustrated embodiment, the filter insert is provided with four finger grips and each finger grip is formed as a sub-circular arc member, which is connected to a bar by means of a film hinge in each of its ends. The number of finger grips is optional but it is preferred that at least two opposed finger grips are arranged so as to facilitate gripping of the filter insert. However the shape of the finger grips can be modified in many different ways, such as a loop-formed finger grip being connected to a bar by means of a hinged shaft portion. Although the filter insert is described as being inserted in a vacuum cleaner of a so called canister type, it is to be understood that it can be used also in other types of vacuum cleaners, such as an upright or a stick type vacuum cleaner.

### Brief description of the drawings

An exemplary embodiment of the invention will now be described with reference to the accompanying drawings, in which:
- Fig 1: is a perspective view of a vacuum cleaner being provided with a filter insert according to the invention;
- Fig 2: is a longitudinal section through the vacuum cleaner in fig 1;
- Fig 3: is a perspective view of a filter insert having the finger grips folded inwards;
- Fig 4: is a perspective view of a filter insert having the finger grips folded outwards; and
- Fig 5: is a cross section through the filter insert.

### Detailed description of an embodiment of the invention

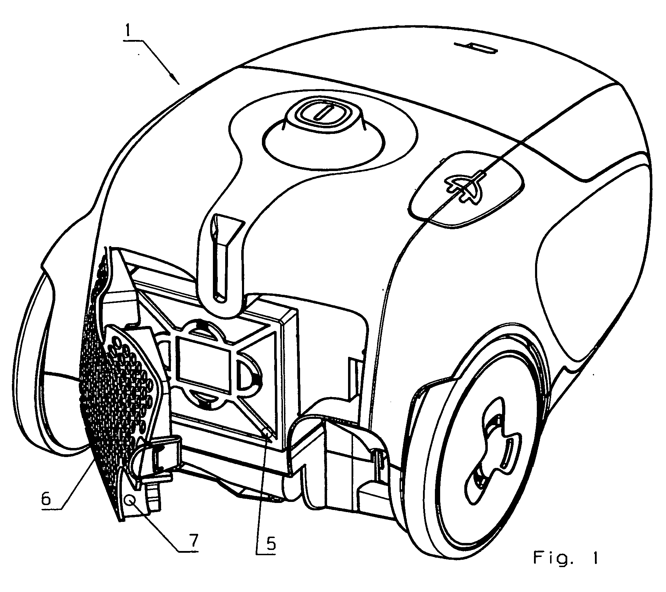

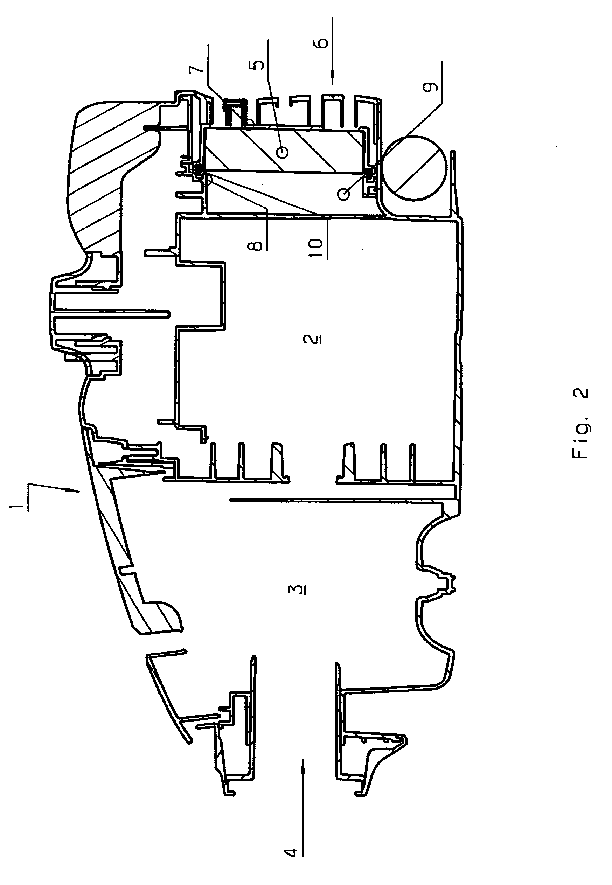

Reference is first made to the perspective view of fig 1 and the longitudinal section of fig 2, wherein the vacuum cleaner illustrated therein is of a so called canister type having a vacuum cleaner body 1, in which is accommodated a not shown motor-fan unit in a motor-fan unit compartment 2, for generating an air flow through the vacuum cleaner, and a dust collecting compartment 3 for collecting dust and debris in a not shown dust collecting bag. The dust and debris is drawn into the vacuum cleaner through a not shown hose and tube adapted to be connected to a hose connection 4. To admit capture of possible particles, which may penetrate the dust bag, the vacuum cleaner is provided with an exhaust filter in form of a filter insert 5 at an air outlet 6. In this way it can be prevented that such particles are blown out in the environment by means of the vacuum cleaner.

In the perspective view of fig 1, the vacuum cleaner is shown from behind having a filter lid 7 in an open state. As can be seen, the filter insert 5 is positioned behind the filter lid such that the filter lid, when the filter insert is mounted in the vacuum cleaner and the filter lid is closed, will press the filter insert towards a seating 8 around an air passage 9 through the vacuum cleaner, as is illustrated in the longitudinal section of fig 1. To ensure an air tight contact between the seating and the filter insert, a sealing member 10 is provided at a bottom edge of the filter insert.

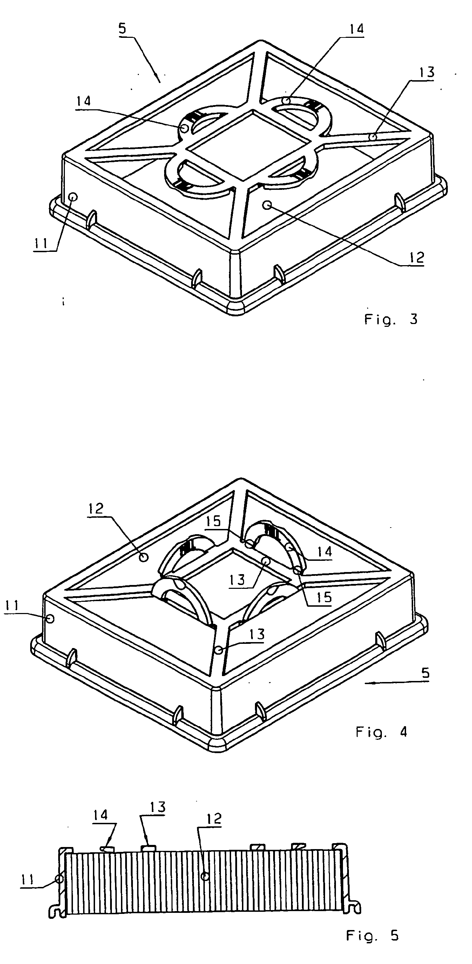

Now reference is made to figs 3-5, in which the design of the exemplary exhaust filter in form of a filter insert 5, is shown more in detail. The filter insert comprises a frame 11, being made of an air impermeable material, and a filter medium 12 positioned inside the frame. The frame is forming wall portions extending in parallel to an intended air flow direction through the filter, and has a rectangular form. A bottom side of the frame is entirely open, while a top side is provided with supporting elements in form of a pattern of bars 13 for supporting the filter medium 12, which is positioned below the bars within the frame. In the illustrated embodiment, the bars form a centrally positioned rectangle, which is connected to the frame by means of four diagonal bars.

Each of the bars incorporated in the rectangle is connected to respective ends of a sub-circular finger grip 14 by means of a film hinge 15, i.e. a thinned material portion, such that the respective finger grip can be folded inwards and positioned in parallel to a plane of the filter medium, as is shown in fig 3. This is the normal position when the filter insert is mounted in the vacuum cleaner and has to result that the finger grips practically takes up no space at all in the mounted state of the filter insert. When, on the other hand, the filter insert is to be detached or mounted in the vacuum cleaner, the finger grips can easily be folded outwards to a position in an angle, preferably at right angles, to the plane of the filter medium, as is illustrated in fig 4. In this way it will be easy for a user to hold the filter insert when mounting or releasing it.

## Claims

1. A detachable filter insert for a vacuum cleaner, of the kind having the function of an exhaust filter and being adapted to be mounted in an air passage (9) through the vacuum cleaner and being positioned after a dust collecting compartment in respect of the air flow through the vacuum cleaner, comprising a frame (11) and a filtering medium (12) being positioned within the frame, wherein the frame is provided with supporting elements (13) at an outlet side as seen in the direction of the air flow, for supporting the filtering medium and prevent it from being detached from the frame due to the air flow through the filtering medium, and at least one finger grip (14) to facilitate detaching and mounting of the filter insert (5) for cleaning or replacement, **characterized in that** the at least one finger grip (14) is connected to the supporting elements by means of a hinge connection (15) and can be folded outwards in an angle from a plane of the filter insert medium for facilitating gripping of the filter insert and folded inwards to a position in parallel to the plane of the filter insert in a mounted state.

2. A detachable filter insert according to claim 1, **characterized in that** the at least one finger grip (14) is integrated with the supporting element (13) and the hinge connection (15) between supporting element (13) and the finger grip (14) is in form of a so called film hinge.

3. A detachable filter insert according to claim 1 or 2, **characteri-zed** in that the filter insert comprises two or more finger grips (14).

4. A detachable filter insert according to any of the preceding claims, **characterized in that** the at least one finger grip (14) is in form of a semi-circular arc, which in each end is connected to a supporting element (13) by means of a hinge connection (15).

5. A detachable filter insert according to any of the preceding claims, **characterized in that** the supporting element is in form of at least one bar (13) extending over the surface of the filter medium at the outlet side.

6. A detachable filter insert according to claim 5, **characteri-zed** in that the bars (13) form a quadrangle, which in at least two opposed sides comprises finger grips (14).

7. A detachable filter insert according to any of the preceding claims, **characterized in that** the filter frame (11) has a box form with the supporting elements (13) positioned at the outlet side.

8. A detachable filter insert according to any of the preceding claims, **characterized in that** the filter frame (11) is provided with a sealing (8) at an inlet side as seen in the direction of the air flow.

## Patentansprüche

1. Abnehmbarer Filtereinsatz für einen Staubsauger von der Art, die die Funktion eines Ausblasfilters aufweist, und die für den Einbau in eine Luftpassage (9) durch den Staubsauger ausgeführt und in Bezug auf den Luftstrom durch den Staubsauger hinter einem Staubsammelfach positioniert ist, aufweisend einen Rahmen (11) und ein innerhalb des Rahmens positioniertes Filtermedium (12), wobei der Rahmen mit Stützelementen (13) an einer in der Luftströmungsrichtung gesehenen Auslassseite bereitgestellt ist, um das Filtermedium abzustützen und dessen Lösen vom Rahmen aufgrund des Luftstroms durch das Filtermedium zu verhindern, und wenigstens einen Fingergriff (14) zum leichteren Abnehmen und Einsetzen des Filtereinsatzes (5) zwecks Reinigung oder Auswechseln, **dadurch gekennzeichnet, dass** wenigstens ein Fingergriff (14) über eine Scharnierverbindung (15) mit den Stützelementen verbunden ist und in einem Winkel aus einer Ebene des Filtereinsatzmediums nach außen geklappt werden kann, um das Greifen des Filtereinsatzes zu ermöglichen, und nach innen in eine Position geklappt werden kann, die parallel zur Ebene des Filtereinsatzes in eingebautem Zustand liegt.

2. Abnehmbarer Filtereinsatz nach Anspruch 1, **dadurch gekennzeichnet, dass** der wenigstens eine Fingergriff (14) in das Stützelement (13) integriert ist und die Scharnierverbindung (15) zwischen Stützelement (13) und Fingergriff (14) als so genanntes Folienscharnier ausgeführt ist.

3. Abnehmbarer Filtereinsatz nach Anspruch 1 oder 2, **dadurch gekennzeichnet, dass** der Filtereinsatz zwei oder mehrere Fingergriffe (14) aufweist.

4. Abnehmbarer Filtereinsatz nach einem der vorhergehenden Ansprüche, **dadurch gekennzeichnet, dass** der wenigstens eine Fingergritt (14) die Form eines halbkreisförmigen Bogens aufweist, der an jedem Ende mit einem Stützelement (13) mithilfe einer Scharnierverbindung (15) verbunden ist.

5. Abnehmbarer Filtereinsatz nach einem der vorhergehenden Ansprüche, **dadurch gekennzeichnet, dass** das Stützelement die Form von wenigstens einem Stab (13) aufweist, der sich über die Fläche des Filtermediums auf der Auslassseite erstreckt.

6. Abnehmbarer Filtereinsatz nach Anspruch 5, **dadurch gekennzeichnet, dass** die Stäbe (13) ein Viereck bilden, das an wenigstens zwei einander gegenüber liegenden Seiten Fingergriffe (14) aufweist.

7. Abnehmbarer Filtereinsatz nach einem der vorhergehenden Ansprüche, **dadurch gekennzeichnet, dass** der Filterrahmen (11) eine Kastenform mit den Stützelementen (13), positioniert an der Auslassseite, aufweist.

8. Abnehmbarer Filtereinsatz nach einem der vorhergehenden Ansprüche, **dadurch gekennzeichnet, dass** der Filterrahmen (11) mit einer Dichtung (8) auf einer in der Luftströmungsrichtung gesehenen Einlassseite aufweist.

## Revendications

1. Cartouche de filtre détachable pour aspirateur, du type filtre de sortie, qui peut être installée dans un passage d'air (9) situé dans l'aspirateur et qui est placée après un compartiment de collecte des poussières par rapport à l'écoulement d'air dans l'aspirateur, comprenant un cadre (11) et un milieu filtrant (12) placé à l'intérieur du cadre, le cadre comportant des éléments de support (13) au niveau d'un côté de sortie tel que vu dans la direction de l'écoulement d'air, pour supporter le milieu filtrant et l'empêcher de se détacher du cadre du fait de l'écoulement d'air à travers le milieu filtrant, et au moins un moyen de prise (14) pour faciliter le détachement et l'installation de la cartouche de filtre (5) pour le nettoyage ou le remplacement, **caractérisé en ce que** le ou les moyens de prise (14) sont reliés aux éléments de support à l'aide d'une liaison charnière (15) et peuvent être pliés vers l'extérieur sous un certain angle par rapport à un plan de la cartouche de filtre pour faciliter la prise de la cartouche de filtre, et pliés vers l'intérieur jusqu'à une position parallèle au plan de la cartouche de filtre lorsque cette dernière est installée dans l'aspirateur.

2. Cartouche de filtre détachable selon la revendication 1, **caractérisée en ce que** le ou les moyens de prise (14) sont intégrés dans l'élément de support (13) et la liaison charnière (15) entre l'élément de support (13) et le moyen de prise (14) a la forme d'une charnière, dite pelliculaire.

3. Cartouche de filtre détachable selon la revendication 1 ou 2, **caractérisée en ce que** la cartouche de filtre comprend deux moyens de prise (14) ou plus.

4. Cartouche de filtre détachable selon l'une quelconque des revendications précédentes, caractérisée en ce le ou les moyens de prise (14) ont la forme d'un arc semi-circulaire, dont chaque extrémité est reliée à un élément de support (13) au moyen d'une liaison charnière (15).

5. Cartouche de filtre détachable selon l'une quelconque des revendications précédentes, **caractérisée en ce que** l'élément de support a la forme d'au moins une barre (13) s'étendant sur la surface du milieu filtre du côté de sortie.

6. Cartouche de filtre selon la revendication 5, **caractérisée en ce que** les barres (13) forment un quadrilatère, qui dans au moins deux côtés opposés comprennent des moyens de prise (14).

7. Cartouche de filtre détachable selon l'une quelconque des revendications précédentes, **caractérisée en ce que** le cadre (11) de filtre est doté d'un boîtier formé avec les éléments de support (13) placés au côté de sortie.

8. Cartouche de filtre détachable selon l'une quelconque des revendications précédentes, **caractérisée en ce que** le cadre (11) de filtre est conçu avec un joint (8) à un côté d'entrée tel que vu dans la direction de l'écoulement d'air.
